Europäisches Patentamt

European Patent Office

Office européen des brevets

(11) Veröffentlichungsnummer: **0 189 509**
**B1**

(12) # EUROPÄISCHE PATENTSCHRIFT

(45) Veröffentlichungstag der Patentschrift:
**22.06.88**

(51) Int. Cl.⁴: **F 16 F 13/00,** B 60 K 5/12,
F 16 F 7/10

(21) Anmeldenummer: **85105103.7**

(22) Anmeldetag: **26.04.85**

(54) **Motorlager.**

(30) Priorität: **15.01.85 DE 3501111**

(43) Veröffentlichungstag der Anmeldung:
**06.08.86 Patentblatt 86/32**

(45) Bekanntmachung des Hinweises auf die Patenterteilung:
**22.06.88 Patentblatt 88/25**

(84) Benannte Vertragsstaaten:
**DE FR GB IT**

(56) Entgegenhaltungen:
**EP - A - 0 058 408**
**EP - A - 0 115 417**
**EP - A - 0 129 780**
**EP - A - 0 133 588**
**EP - A - 0 164 081**
**DE - A - 2 947 018**

(73) Patentinhaber: **Firma Carl Freudenberg, Höhnerweg 4,
D-6940 Weinheim/Bergstrasse (DE)**

(72) Erfinder: **Sciortino, Giacomo, Schröderstrasse 1,
D-6900 Heidelberg 1 (DE)**

(74) Vertreter: **Weissenfeld-Richters, Helga, Dr.,
Höhnerweg 2, D-6940 Weinheim/Bergstrasse (DE)**

## Beschreibung

Die Erfindung betrifft ein Motorlager mit hydraulischer Dämpfung, enthaltend einen durch ein Auflager, eine Tragfeder und Trennwand begrenzten Arbeitsraum und einen durch die Trennwand und eine nachgiebige Pufferwand begrenzten Ausgleichsraum, die durch eine Drosselöffnung verbunden und mit einer Flüssigkeit gefüllt sind sowie eine in der Trennwand angeordnete, gasgefüllte Kammer, die gegenüber dem Arbeitsraum durch eine kreisförmig begrezte, an einer elastischen Ringmembrane aufgehängte erste scheibenförmige Tilgermasse abgeschlossen ist.

Auf ein Motorlager der vorgenannten Art nimmt die europäische Patentanmeldung 0 115 417 Bezug. Die elastisch aufgehängte Scheibe ist dabei in sich steif ausgebildet und zwischen beiderseitigen Anschlägen angeordnet, um eine gute Dämpfung niederfrequenter Schwingungen und eine gute Isolierung hochfrequenter Schwingungen zu erzielen. Beide Arten von Schwingungen treten indessen bei einem in einem Kraftfahrzeug verwendeten Motorlager gewöhnlich in kombinierter Form auf, und in diesem Falle wird nur eine geringe Wirksamkeit erzielt.

Der Erfindung liegt die Aufgabe zugrunde, ein Motorlager der vorstehend angesprochenen Art derart weiter zu entwickeln, dass sich eine gute Isolierung hochfrequenter Schwingungen und eine gute Dämpfung tieffrequenter Schwingungen auch dann ergibt, wenn die beiden Schwingungsarten gleichzeitig in das Motorlager eingeleitet werden.

Diese Aufgabe wird erfindungsgemäss bei einem Motorlager der eingangs genannten Art dadurch gelöst, dass die gasgefüllte Kammer zusätzlich gegenüber dem Ausgleichsraum durch eine an einer zweiten elastischen Ringmembrane aufgehängte zweite scheibenförmige Tilgermasse abgeschlossen ist. Auf vorteilhafte Ausgestaltung nehmen die Unteransprüche Bezug.

Die Funktion des erfindungsgemäss vorgeschlagenen Motorlagers dürfte darauf beruhen, dass sich die durch das in der Kammer befindliche Gasdruckpolster elastisch aufeinander abgestützten Tilgermassen in ihrer Beweglichkeit gegenseitig beeinflussen. Ihre elastische Aufhängung erfährt dadurch in Abhängigkeit von den eingeleiteten Kräften eine stetige Veränderung. Eine gute Kompensation hochfrequenter Schwingungen ist hiervon die Folge, wobei es von entscheidendem Vorteil ist, dass sich diese vorteilhafte Wirkung auch dann einstellt, wenn gleichzeitig neben den hochfrequenten Schwingungen niederfrequente Schwingungen in das Motorlager eingeleitet werden.

Im Hinblick auf die Auslegung des vorgeschlagenen Motorlagers für die Abstützung üblicher Kfz-Motoren hat es sich als vorteilhaft erwiesen, wenn das Verhältnis aus den insgesamt vorhandenen Tilgermassen und der anteiligen Masse des Motors maximal 0,1 beträgt und das Verhältnis aus der Steifigkeit einer jeden Ringmembrane und der Steifigkeit der Tragfeder maximal 1,0. Bei der Auslegung ist zu berücksichtigen, dass bei einer Variation eines der beiden Parameter stets auch der andere Parameter im gleichen Richtungssinne verändert werden muss. Die Grobabstimmung kann dabei aufgrund theoretischer Berechnungen erfolgen, wozu es einer weiteren Erläuterung an dieser Stelle nicht bedarf. Die Feinabstimmung ist der praktischen Erprobung des mit dem vorgeschlagenen Motorlager ausgestatteten Kfz. unter normalen Betriebsbedingungen vorbehalten.

Die erste und/oder zweite Tilgermasse kann als Kettenschwinger ausgebildet werden, welche radial ineinander liegend wenigstens zwei aufeinanderfolgende Scheiben umfassen, die durch Ringmembranen elastisch aneinander festgelegt sind. Innerhalb einer jeden Scheibe sind in diesem Falle mehrere Tilgermassen vorhanden, die sich in ihrer Beweglichkeit gegenseitig beeinflussen, wobei die Tilgermassen in ihrer Gesamtheit auf dem Gasdruckpolster abgestützt sind, das in der Kammer enthalten ist. Die Dämpfung- und Isolierwirkung bei Einleitung von Mischfrequenzen wird hierdurch deutlich verbessert.

Eine weitere Verbesserung der Wirksamkeit lässt sich erzielen, wenn das Verhältnis aus der hydraulisch wirksamen Kolbenfläche des an der Tragfeder festgelegten Traglagers und der entsprechenden hydraulisch wirksamen Fläche einer jeden Tilgermasse in dem Bereich zwischen 1 und 16 liegt, vorteilhaft in dem Bereich zwischen 2 und 8. Die erstgenannte Kolbenfläche umfasst etwa 2/3 derjenigen Fläche, die sich ergibt, wenn man die Unterseite des Traglagers und der Tragfeder bzw. die Oberseite der Pufferwand auf eine sich quer zu ihrer Bewegungsrichtung erstreckende Fläche projiziert. Die letztgenannte Fläche umfasst die entsprechend projizierte Abbildung einer jeden Tilgermasse, vergrössert um 50% der in gleicher Weise projizierten Fläche der anschliessenden Ringmembrane.

Sämtliche bei dem erfindungsgemäss vorgeschlagenen Motorlager zur Anwendung gelangenden Ringmembranen sind so ausgebildet, dass sie ohne nennenswerte Dämpfungsarbeit verformbar sind. Die angesprochene Tilgerwirkung kommt hierdurch besonders deutlich zum Tragen. Die zur Anwendung gelangenden Tilgermassen haben in bezug auf eine Verwendung des vorgeschlagenen Motorlagers in einem Kfz.-Motor ein Gewicht von 10 bis 200 g, bei PKW-Motoren zumeist von 10 bis 50 g. Eine von der absoluten Kreisform abweichende Gestaltung der Scheibe und der dazugehörigen Ringmembran ist möglich. Oval oder polygonförmig begrenzte Ausführungen können daher ebenfalls in die Überlegungen mit einbezogen werden.

Der Gegenstand der vorliegenden Erfindung wird nachfolgend anhand der in der Anlage beigefügten Zeichnung weiter erläutert. Es zeigen:

Fig. 1 eine beispielhafte Ausführung des erfindungsgemässen Motorlagers in längsgeschnittener Darstellung

Fig. 2 eine beispielhafte Ausführung einer Ringmembrane in halb geschnittener Darstellung.

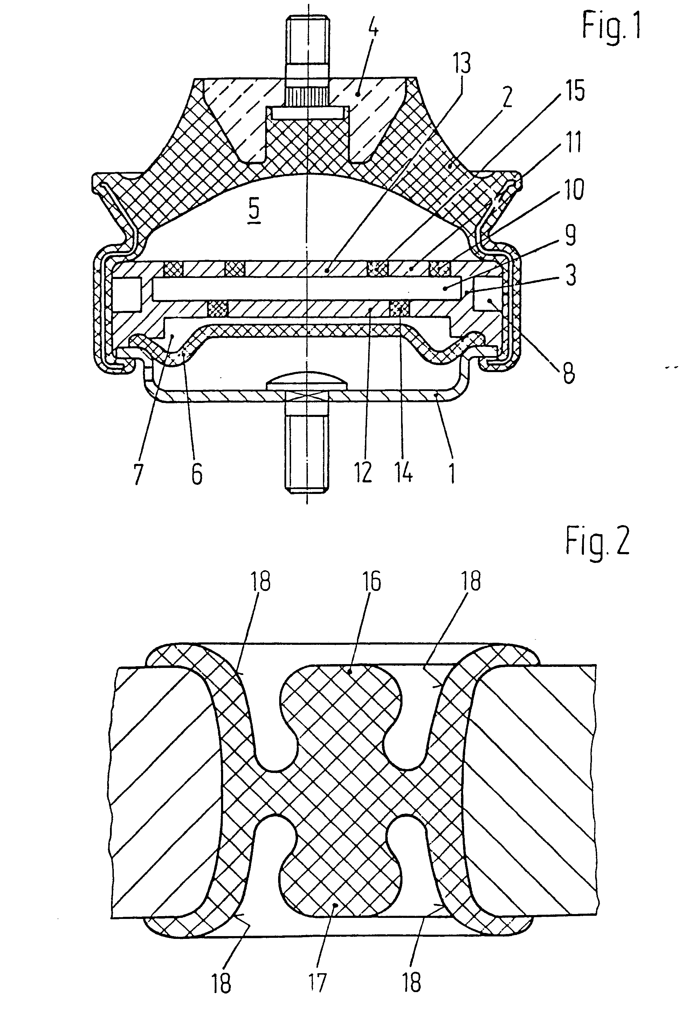

Das in Fig. 1 gezeigte Motorlager umfasst das Auflager 1 und das Traglager 4, die durch die hohlkegelig ausgebildete Tragfeder 2 verbunden und aufeinander abgestützt sind.

Das Auflager ist tassenförmig ausgebildet und liegt aussenseitig an der Unterseite der Trennwand 3 an, gegen welche es durch den randseitigen Wulst der aus elastisch nachgiebigem Material bestehenden Pufferwand 6 abgedichtet ist. Die Pufferwand 6 und die Trennwand 3 begrenzen gemeinsam den Ausgleichsraum 7. Er ist ebenso wie der Arbeitsraum 5 und die beide Räume verbindende Drosselöffnung 8 mit einer Flüssigkeit gefüllt, vorzugsweise mit ein Frostschutzmittel enthaltendem Wasser.

Die Trennwand 3 enthält einen gasgefüllten Hohlraum 9. Der Druck des in dem Hohlraum enthaltenen Gases ist auf einen bestimmten Wert eingestellt und kann sowohl oberhalb als auch unterhalb des atmosphärischen Druckes liegen. Er bewirkt eine gegenseitige elastische Abstützung der in Richtung des Arbeitsraumes 5 und in Richtung des Ausgleichsraumes 7 elastisch verschiebbaren Teile der Begrenzungswände der Kammer 9. Diese werden auf der dem Ausgleichsraum 7 zugewandten Seite durch die Scheibe 12 einschliesslich der dazugehörigen Ringmembrane 14 gebildet, auf der dem Arbeitsraum zugewandten Seite durch zwei in radialer Richtung aufeinanderfolgende Scheiben 11, 13, die durch zwischengeschaltete Ringmembranen elastisch aneinander festgelegt sind.

Fig. 2 zeigt die in Fig. 1 zur Anwendung gelangten Ringmembranen in längsgeschnittener Darstellung. Diese weisen auf den einander gegenüberliegenden Seiten zwei einander spiegelbildlich zugeordnete axiale Ringvorsprünge 17 auf, denen sich im wesentlichen in radialer Richtung erstreckende Anschlagflächen 18 weiterer Ringvorsprünge in einem Abstand zugeordnet sind. Diese sind den Ringvorsprüngen spiegelbildlich zugeordnet und dienen dazu, die axiale Beweglichkeit der durch die Ringmembranen festgelegten Scheiben auf ein bestimmtes Mass zu begrenzen. Der diesbezügliche Wert ist durch die gegenseitige Berührung der Ringvorsprünge 16, 17 mit der jeweils gegenüberliegenden Anschlagsfläche 18 gekennzeichnet, wobei es von erheblichem Vorteil ist, dass sich keinerlei Berührungsgeräusche ergeben.

**Patentansprüche**

1. Motorlager mit hydraulischer Dämpfung, enthaltend einen durch ein Auflager (4), eine Tragfeder (2) und eine Trennwand (3) begrenzten Arbeitsraum (5) und einen durch die Innenwand und eine nachgiebige Pufferwand (6) begrenzten Ausgleichsraum (7), die durch eine Drosselöffnung (8) verbunden und mit einer Flüssigkeit gefüllt sind sowie eine in der Trennwand (3) angeordnete, gasgefüllte Kammer (9), die gegenüber dem Arbeitsraum (5) durch eine kreisförmig begrenzte, an einer elastischen Ringmembrane (10) aufgehängte, erste scheibenförmige Tilgermasse (11, 13, 15) abgeschlossen ist, dadurch gekennzeichnet, dass die gasgefüllte Kammer (9) zusätzlich gegenüber dem Ausgleichsraum (7) durch eine an einer elastischen Ringmembran (14) aufgehängte zweite scheibenförmige Tilgermasse (12) abgeschlossen ist.

2. Motorlager nach Anspruch 1, dadurch gekennzeichnet, dass die erste und/oder zweite Tilgermasse als Kettenschwinger ausgebildet sind und dass sie, radial ineinanderliegend, wenigstens 2 aufeinander folgende Scheiben (11, 13) umfassen, die durch Ringmembranen (10, 15) elastisch aneinander festgelegt sind.

3. Motorlager nach Anspruch 1 oder 2, dadurch gekennzeichnet, dass die Ringmembrane auf den einander gegenüberliegenden Seiten zwei einander spiegelbildlich zugeordnete, axiale Ringvorsprünge (16, 17) aufweisen und dass den radialen Begrenzungsflächen der Ringvorsprünge Anschlagsflächen (18) weiterer Ringvorsprünge in einem Abstand zugeordnet sind, die einander und den Ringvorsprüngen spiegelbildlich zugeordnet sind.

**Claims**

1. An engine mounting having hydraulic damping, containing a working space (5), which is bounded by a support (4), a bearing spring (2) and a partition (3), and containing a compensating space (7), which is bounded by the partition and a flexible buffer wall (6), said spaces being joined by a throttle opening (8) and filled with a liquid, as well as containing a gas-filled chamber (9), which is arranged in the partition (3) and is closed off from the working space (5) by a first disc-shaped absorber mass (11, 13, 15), which is circular in shape and is suspended on a flexible annular membrane (10), characterized in that the gas-filled chamber (9) additionally is closed off from the compensating space (7) by a second disc-shaped absorber (12) suspended on a flexible annular membrane (14).

2. An engine mounting according to claim 1, characterized in that the first and/or second absorber mass is designed as a linked oscillator and that it comprises at least two successive discs (11, 13), lying radially one in the other, which are fixed to each other flexibly by annular membranes (10, 15).

3. An engine mounting according to claim 1 or 2, characterized in that the annular membranes have on the mutually opposite sides two axial annular projections (16, 17), which are arranged in a mirror image fashion to each other, and that the radial boundary surfaces of the annular projections are associated with stop surfaces (18) of further annular projections at a distance away from them, which stop surfaces are arranged in mirror image fashion to each other and to the annular projections.

**Revendications**

1. Support de moteur avec amortissement hydraulique, ce support comportant un compartiment de travail (5) délimité par un appui (4), par un ressort porteur (2) et par une paroi de séparation (3), ainsi qu'un compartiment de compensation (7) délimité par la paroi de séparation et par une paroi tampon flexible (6), ces compartiments étant reliés par une ouverture d'étranglement (8), tandis qu'ils sont remplis d'un liquide, ainsi qu'une chambre (9) remplie de gaz et disposée dans la paroi de séparation (3), cette chambre étant fermée vis-à-vis du compartiment de travail (5) par une première masse d'amortissement en forme de disque (11, 13, 15) délimitée circulairement et suspendue à une membrane annulaire élastique (10), caractérisé en ce que la chambre remplie de gaz est, en outre, fermée vis-à-vis du compartiment de compensation (7) par une deuxième masse d'amortissement en forme de disque (12) suspendue à une membrane annulaire élastique (14).

2. Support de moteur selon la revendication 1, caractérisé en ce que la première et/ou la deuxième masse d'amortissement est ou sont réalisée(s) sous forme d'oscillateurs à chaîne et en ce qu'elle(s) comprend (comprennent) au moins deux disques se succédant (11, 13) pénétrant radialement l'un dans l'autre et fixés élastiquement l'un à l'autre par des membranes annulaires (10, 15).

3. Support de moteur selon la revendication 1 ou 2, caractérisé en ce que les membranes annulaires comportent, sur leurs faces mutuellement opposées, deux saillies annulaires axiales (16, 17) attribuées l'une à l'autre de manière spéculaire, tandis qu'aux surfaces radiales de délimitation de ces saillies annulaires, sont attribuées, à l'écart l'une de l'autre, des surfaces de butée (18) d'autres saillies annulaires, attribuées l'une à l'autre et aux saillies annulaires précitées de manière spéculaire.

Fig. 1

Fig. 2